# EUROPÄISCHE PATENTANMELDUNG

(11) **EP 1 605 115 A2**
(43) Veröffentlichungstag der Anmeldung: **14.12.2005**
(21) Anmeldenummer: 05010102.1
(22) Anmeldetag: 10.05.2005
(51) Int. Cl.: E04F 15/024

(54) **Distanzhalteplatte**

(30) Priorität: 08.06.2004 DE 202004009089 U
(71) Anmelder: Viessmann Kältetechnik AG, 95030 Hof/Saale (DE)
(72) Erfinder: Gebelein, Bernd, 95179 Geroldsgrün (DE)
(74) Vertreter: Wolf, Günter

(57) **Zusammenfassung**

Die Erfindung betrifft eine Distanzplatte zur Unterlage für die Böden von insbesondere Tiefkühl-, Kühl- und Frischhaltezellen, bestehend aus einer in Bezug auf den Auflageboden höhenverstellbaren Tragplatte (1).

Nach der Erfindung ist vorgesehen, daß die Tragplatte (1) aus zwei gegeneinander zentriergeführten und zueinander drehbaren Kreisscheiben (2,3) gebildet ist, deren gegeneinander gerichteten Flächen (4,5) in sich entsprechende Sektoren (6) gegliedert sind, wobei alle Sektorenflächen (7) mit gleicher Steigung schräg gestellt sind, diese aber zwischen mindestens einer tiefsten und mindestens einer höchsten Stufe (8,9) stufenförmig ansteigend angeordnet sind.

## Beschreibung

Die Erfindung betrifft eine hier sogenannte Distanzhalteplatte zur Unterlage für zu belüftende Böden von insbesondere Tiefkühl-, Kühl- und Frischhaltezellen gemäß Oberbegriff des Patentanspruches 1.

Raumzellen der insbesondere genannten Art bedürfen aus Gründen sich einstellender Temperaturunterschiede zwischen Zellenboden und Aufstellboden hinsichtlich der Trockenhaltung ihrer Zellenböden einer Unterbodenbelüftung, d.h., zwischen Zellenboden und Aufstell- bzw. Unterboden muß ein Belüftungsspalt vorhanden sein, welcher Forderung durch entsprechend bemessene Unterlagelemente Rechnung getragen wird. Eine Schwierigkeit besteht dabei darin, daß die Aufstellböden für solche Zellen in der Regel nicht ideal ebenflächig sind, d.h., im Bereich von Unebenheiten müßten entsrechend dickenangepaßte Unterlageelemente verwendet oder auf sonstig geeignete Weise für einen Differenzausgleich an solchen Stellen gesorgt werden, zumal die Böden derartiger Zellen einer gleichmäßig verteilten Unterstützung bedürfen. Dies einzuhalten ist zwar mit entsprechenden Hilfsmitteln und Hilfsmaßnahmen (siehe hierzu bspw. DE-A-38 21 047 A1 und DE-A-299 20 034 U1) ohne weiteres erreichbar, was aber in der Regel mit einem beträchtlichen Installationszeitaufwand bei diesen Lösungen verbunden ist. Um Nivellierungen vornehmen zu können, sind außerdem auch höhenverstellbare Unterlagselemente nach der EP-A-0061179 A1 und nach der EP-A-1298266 A2 bekannt. Diese Elemente bestehen im Prinzip aus einem Sockel zur Aufnahme eines Gewindestangenstückes mit dessen Hilfe eine Tragscheibe als eigentliches Nivellierelement für den darauf anzuordnenden Boden höhenverstellbar ist. Abgesehen von ihrer relativ aufwendigen Dreiteiligkeit bean spruchen diese Unterlageelemente bzgl. ihrer Höghe auch in ihrer Tiefststellung schon relativ viel Raum.

Der Erfindung liegt demgemäß die Aufgabe zugrunde, hierzu Abhilfe zu schaffen und eine Distanzhalteplatte zur Verfügung zu stellen, die in entsprechender Anzahl unter dem Zellenboden verteilt die Distanzhaltefunktion für den Zellenboden übernehmen und bei einfacher Ausbildung, Herstellbarkeit und Handhabung die Möglichkeit bieten, Unebenheiten des Aufstellbodens Rechnung zu tragen, verbunden mit der Maßgabe, daß sich die Distanzhalteplatte in allen Stellungen in Form einer Scheibe darstellt.

Diese Aufgabe ist nach der Erfindung durch eine Distanzhalteplatte gemäß der im unabhängigen Patentanspruch 1 angeführten Merkmale gelöst, d.h., diese zeichnet sich dadurch aus, daß sie lediglich aus zwei gegeneinander zentriergeführten und zueinander drehbare Kreisscheiben gebildet ist, deren gegeneinander gerichteten Flächen in sich entsprechende Sektoren gegliedert sind, wobei alle Sektorenflächen mit gleicher Steigung schräg gestellt sind, diese aber zwischen mindestens einer tiefsten und mindestens einer höchsten Stufe stufenförmig ansteigend angeordnet sind.

Damit steht ein Hilfsmittel zur Verfügung, das zum Einen bei Einstellbarkeit und bei etwa der einzuhaltenden Luftspalthöhe entsprechender Dickenbemessung in entsprechender Anzahl zum Lieferumfang einer Zelle gehören, zum Anderen aber auch wesentlich dünner bemessen sein kann, um auf Distanzelemente vorgegebener und unverändererbarer Dicke bzw. Höhe gelegt und höheneingestellt werden zu können, wo dies eine Bodenunebenheit verlangt.

Die ganze aus den beiden lose aufeinander liegenden, aber zentriergeführten und in einer entsprechenden Form jeweils in einem Stück herstellbaren Kreisscheiben gebildete Distanzhalteplatte hat man sich dabei für den praktischen Gebrauch mit einem Durchmesser in der Größenordnung von bspw. 20 bis 40 cm vorzustellen und mit einer Gesamthöhe in größter Aufspreizstellung in einer Größenordnung von bspw. 20 bis 30 mm. Die vorzusehende Stufenhöhe liegt dabei in der Größenordnung von 1 bis 3 mm.
Da die beiden Kreisscheiben in ihren gegeneinander gerichteten Flächen gewissermaßen eine im Kreisverband angeordnete Hintereinanderreihung von schiefen Ebenen darstellen, sind in Tiefststellung der beiden Scheiben zueinander alle Stufen miteinander verrastet, während in höchster Aufspreizstellung beider Scheiben nur noch die höchsten Stufen miteinander verrastet sind, was noch näher dargestellt und erläutert wird.

Mit Rücksicht darauf sind die Kreisscheiben jeweils mit mindestens zwei bzw. vorzugsweise drei Stufenzügen mit jeweils sich entsprechender Anzahl von Stufen versehen, was bei Auf - gliederung in drei Stufenzüge bei Höchststellung zu einer dreifachen, um 120° versetzten stabilen Flächenauflage führt. Bei nur einem über 360° durchgehenden Stufenzug ergäbe sich in Höchststellung demgegenüber nur eine einzige in Bezug auf das Kreisscheibenzentrum seitliche Flächenauflage, die zwar auch noch unter Belastung tragen würde, welche Einstellung aber insoweit etwas instabil wäre, als dabei die restlichen Schrägflächen nicht mehr in Tragkontakt stünden.

Was die Zentrierführung der beiden Kreisscheiben betrifft, so ist diese sehr einfach dadurch darzustellen, daß eine der Kreisscheiben mit einer zentrischen Nabe oder einem Zapfen und die andere Kreisscheibe mit einer Naben- bzw. Zapfenaufnahme versehen ist. Die Längen der Nabe und der Nabenaufnahme, welche Letztere einfach bspw. ein entsprechend durchmessergroßes Loch in der einen Scheibe darstellt, sind so zu bemessen, daß die Nabe bzw. der Zapfen in Tiefststellung im Loch aufgenommen ist und in Höchststellung gerade noch in das Loch eingreift.

Die erfindungsgemäße Distanzhalteplatte und weitere vorteilhafte Ausführungsformen werden nachfolgend anhand der zeichnerischen Darstellung von Ausführungsbeispielen näher erläutert.

Es zeigt
- Fig.1: die bevorzugte Ausführungsform der Distanhalteplatte in Seitenansicht;
- Fig.2: die Distenzhalteplatte gemäß fig.1 in Draufsicht;
- Fig.3: in Seitenansicht und Abwicklung eine mit drei Stufenzügen versehene Distanzhalteplatte in Tiefststellung;
- Fig.4: die Distanzhalteplatte gemäß Fig.3 in Höchststellung und
- Fig.5: ein Installationsbeispiel für einen Zellenboden.

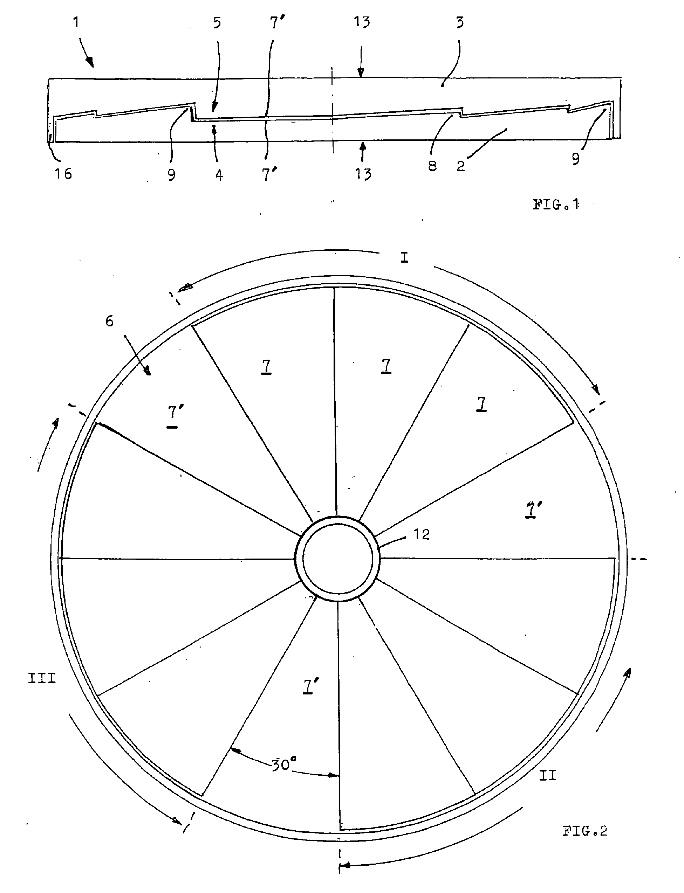

Beim in den Fig. 1 bis 4 dargestellten Ausführungsbeispiel, das bevorzugt wird, handelt es sich um Kreisscheiben 2,3 mit in drei Gruppen bzw. Stufenzügen I, II, III gegliederten Sektorenflächen 7, die noch näher erläutert werden.

Die dargestellte, in etwa gleich starke Dickenbemessung der beiden Kreisscheiben 2,3 ist nicht zwingend, d.h., insbesondere die bodenauflageseitige Scheibe 2 kann durchaus um ein Mehrfaches dicker bemessen sein als die andere Scheibe 3.

Abgesehen von dieser Gruppengliederung ist aber für derartige Distanzhalteplatten 1 nach der Erfindung zunächst einmal wesentlich, daß die Tragplatte 1 aus zwei gegeneinander zentriergeführten und zueinander verdrehbaren Kreisscheiben 2,3 gebildet ist, deren gegeneinander gerichteten Flächen 4,5 in sich entsprechende Sektoren 6 gegliedert sind. Alle Sektorenflächen 7 sind dabei mit gleicher Steigung schräg gestellt, die aber zwischen mindestens einer tiefsten und mindestens einer höchsten Stufe 8,9 stufenförmig ansteigend angeordnet sind.

Diese immerhin mögliche Ausführungsform ohne Gliederung in Gruppen bzw. Stufenzüge, bei der sich also die Stufen über die ganze Kreisbogenlänge von 360° aneinanderreihen, ist nicht besonders dargestellt, da ohne weiteres vorstellbar. Auch die bspw. dargestellte Sektorenteilung von 30° ist nicht zwingend, d.h., es können bspw. auch achtzehn 20°-Sektorenflächen vorgesehen werden.

Bei der insbesondere aus Fig.2 deutlich werdenden Gliederung in drei Gruppen bzw. Stufenzüge I, II, III befinden sich zwischen den Gruppen Sektorenflächen 7', die nicht schräg gestellt sind, sich also parallel zu den Anlageflächen 13 der Kreisscheiben 2,3 erstrecken.

Zur Zentrierführung ist eine der Kreisscheiben 2,3 mit einer zentrischen Nabe bzw. einem zentrischen Zapfen 11 und die andere Kreisscheibe mit einer Nabenaufnahme 12 versehen. Wie aus Fig.1 ersichtlich, ist es aber auch möglich, die obere Kreisscheibe 3 die untere Scheibe 2 mit einem Umfangsrand 16 übergreifen zu lassen.

Vorteilhaft kann von den äußeren Anlageflächen 13 der beiden Kreisscheiben 2,3 die unterbodenauflageseitige Fläche flächenstrukturiert ausgebildet sein, um damit einen gewissen Verdrehwiderstand zu bilden. Diesbezüglich möglich ist aber auch eine Ausbildung dahingehend, daß die unterbodenauflageseitige Kreisscheibe 2 mit einem Klebebelag versehen ist. Beides ist nicht besonders dargestellt, da ohne weiteres vorstellbar.
Unter flächenstruktiert hat man sich dabei bspw. eine feine Waffeleisenstruktur, Riffelung, Besandung od.dgl. vorzustellen und beim Klebebelag entsprechende Zuschnitte aus bspw. Doppelklebeband.

Ferner kann vorgesehen werden, daß mindestens eine der Kreisscheiben 2,3 an ihrer Umfangsfläche 14 mit Elementen 15 zur Drehverstellung der Scheiben 2,3 versehen ist. Wie in Fig. 3 mit angedeutet, genügt dafür die Anordnung von bspw. Sacklöchern.

Abgesehen davon, daß die Kreisscheiben 2,3 bspw. auch aus Alu-Spritzguß herstellbar sind, ist jedoch vorgesehen, diese aus Kunststoff, vorzugsweise recyceltem Kunststoff zu bilden.

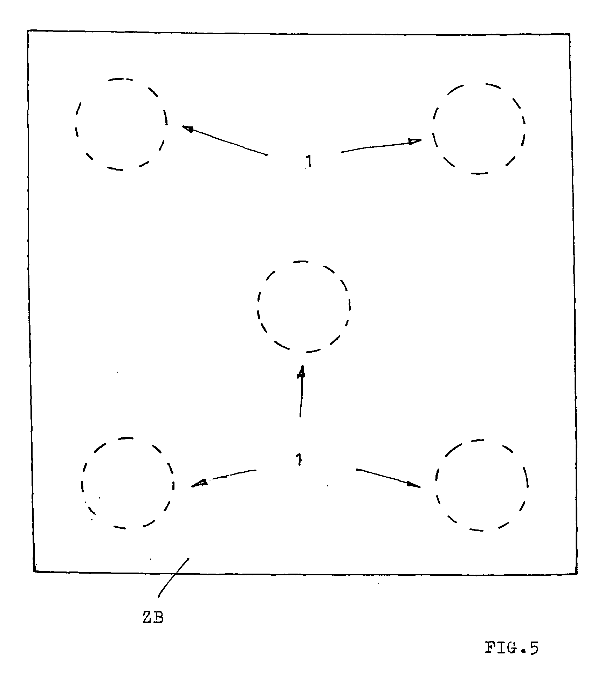

Zur Installtion des Bodens einer Raumzelle werden, wie in Fig.5 dargestellt, die Distanzhalteplatten entsprechend ausgelegt und, sofern mit einem Klebebelag versehen, mit diesem am Un terboden fixiert. Mit Hilfe von Nivilierleiste und Wasserwaage werden dann die einzelnen Distanzhalteplatten auf ihre entsprechende Höheneinstellung kontrolliert und erforderlichenfalls durch Drehen untereinander auf gleiche Höhe eingestellt, so daß dann der Zellenboden ZB einniveliert aufgelegt werden kann.

Falls sich nach aufgesetzter Zelle an der einen oder anderen Stellle ein Nachstellbedarf ergeben sollte, besteht Dank der gegf. vorgesehen Elemente 15 die Möglichkeit, mittels eines geeigneten, in eines der die Elemente 15 darstellenden Sacklöcher passenden Stellelementes die jeweils obere Kreisscheibe 3 bspw. eine Stufe weiterzustellen.

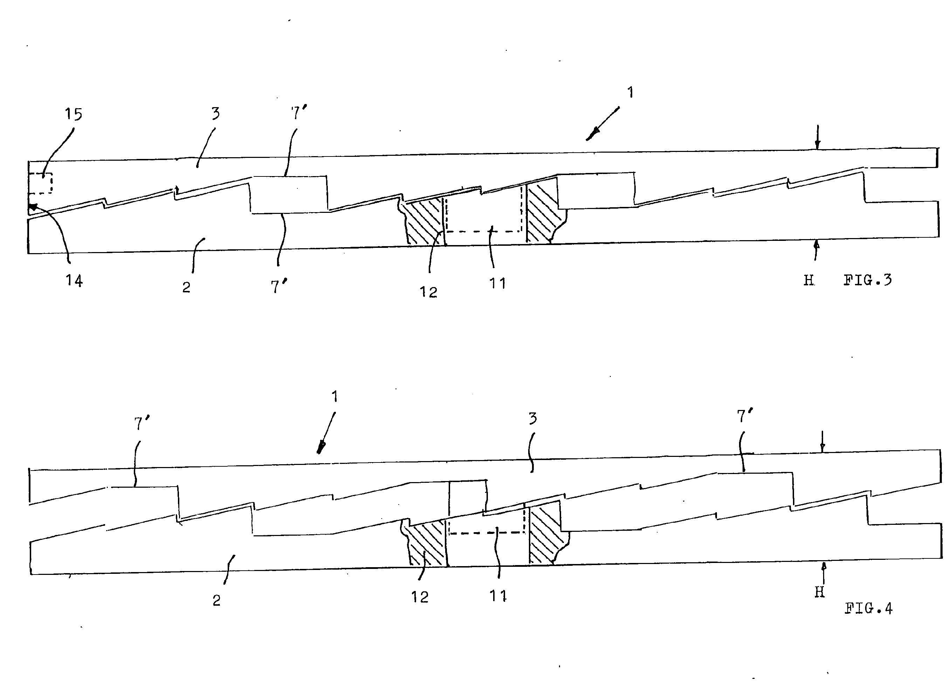

In Fig.4, die wie Fig.3 eine 360° Abwicklung darstellt, ist die höchstmögliche Einstellung der oberen Kreisscheibe 3 gegenüber der unteren Kreisscheibe 2 verdeutlich, wobei der Höhenunterschied H bei einer Drehung um 120° und einer Stufenhöhe von etwa 2 mm gegenüber der Tiefststellung der Distanzhalteplatte 1 gemäß Fig.3 etwa 6 mm beträgt.

## Patentansprüche

1. Distanzplatte zur Unterlage für die Böden von insbesondere Tiefkühl-, Kühl- und Frischhaltezellen, bestehend aus einer in Bezug auf den Auflageboden höhenverstellbaren Tragplatte (1),
**dadurch gekennzeichnet,**
**daß** die Tragplatte (1) aus zwei gegeneinander zentriergeführten und zueinander drehbaren Kreisscheiben (2,3) gebildet ist, deren gegeneinander gerichteten Flächen (4,5) in sich entsprechende Sektoren (6) gegliedert sind, wobei alle Sektorenflächen (7) mit gleicher Steigung schräg gestellt sind, diese aber zwischen mindestens einer tiefsten und mindestens einer höchsten Stufe (8,9) stufenförmig ansteigend angeordnet sind.

2. Distanzhalteplatte nach Anspruch 1,
**dadurch gekennzeichnet,**
**daß** die Kreisscheiben (2,3) jeweils mit mindestens zwei Stufenzügen (10) mit jeweils sich entsprechender Anzahl von Stufen versehen sind.

3. Distanzhalteplatte nach Anspruch 1 oder 2,
**dadurch gekennzeichnet,**
**daß** eine der Kreisscheiben (2,3) mit einer zentrischen Nabe oder einem zentrierzapfen (11) und die andere Kreisscheibe mit einer Nabenaufnahme (12) versehen ist.

4. Distanzhalteplatte nach Anspruch 1 oder 2,
**dadurch gekennzeichnet,**
**daß** die obere Kreisscheibe (2) die untere Kreisscheibe (3) mit einem Umfangsrand (16) übergreift.

5. Distanzplatte nach einem der Ansprüche 1 bis 4,
**dadurch gekennzeichnet,**
**daß** von den äußeren Anlageflächen (13) der beiden Kreisscheiben (2,3) flächenstrukturiert ausgebildet ist.

6. Distanzhalteplatte nach einem der Ansprüche 1 bis 4,
**dadurch gekennzeichnet,**
**daß** die unterbodenauflageseitige Kreisscheibe (2) mit einem Klebebelag versehen ist.

7. Distanzhalteplatte nach einem der Ansprüche 1 bis 6,
**dadurch gekennzeichnet,**
**daß** mindestens eine der Kreisscheiben (2,3) an ihrer Umfangsfläche (14) mit Elementen (15) zur Drehverstellung der Scheiben (2,3) versehen ist.

8. Unterlüftungsplatte nach einem der Ansprüche 1 bis 7,
**dadurch gekennzeichnet,**
**daß** die Kreisscheiben (2,3) aus Kunststoff, vorzugsweise recyceltem Kunststoff gebildet sind.
